# EUROPÄISCHE PATENTSCHRIFT

(11) **EP 3 344 885 B1**
(45) Veröffentlichungstag und Bekanntmachung des Hinweises auf die Patenterteilung: **17.02.2021**
(21) Anmeldenummer: 16754238.0
(22) Anmeldetag: 08.08.2016
(51) Int. Cl.: F16D 7/02

(54) **RASTSTERN FÜR EINE KRAFTFAHRZEUGLENKSÄULE UND VERFAHREN ZUR HERSTELLUNG DIESES**
DETENT STAR WHEEL FOR A STEERING COLUMN OF A MOTOR VEHICLE AND METHOD FOR PRODUCING THE SAME
ÉTOILE D'ARRÊT POUR UNE COLONNE DE DIRECTION DE VÉHICULE À MOTEUR ET PROCÉDÉ DE FABRICATION DE LADITE ÉTOILE

(30) Priorität: 31.08.2015 DE 102015011134
(43) Veröffentlichungstag der Anmeldung: 11.07.2018
(73) Patentinhaber: thyssenkrupp Presta AG, 9492 Eschen (LI); thyssenkrupp AG, 45143 Essen (DE)
(72) Erfinder: HUBER, Sebastian, 6811 Göfis (AT); LAMPERT, Jürgen, 6824 Schlins (AT)
(74) Vertreter: thyssenkrupp Intellectual Property GmbH
(86) Internationale Anmeldenummer: PCT/EP2016/068853
(87) Internationale Veröffentlichungsnummer: WO 2017/036738

(56) Entgegenhaltungen:
- EP-A1- 1 568 554
- EP-A2- 1 728 696
- DE-A1- 10 012 323
- DE-A1-102012 101 388
- FR-A1- 2 714 344
- FR-A1- 2 861 673
- JP-A- 2014 156 225

## Beschreibung

Die vorliegende Erfindung betrifft einen Raststern für ein Lenkschloss einer Kraftfahrzeuglenkung mit den Merkmalen des Oberbegriffs des Anspruchs 1 und ein Verfahren zur Herstellung eines solchen Raststerns.

Kraftfahrzeuglenkungen weisen zur Diebstahlsicherung Lenkschlösser auf, die mit einer Vorrichtung zum bedarfsweisen Blockieren einer Drehbewegung einer Lenkspindel ausgestattet sind. Herkömmlicherweise wird ein in eine Freigabe- oder Sperrstellung überführbares Sperrglied des Lenkschlosses mit einer an der Lenkspindel starr befestigen Blockierhülse in Eingriff gebracht. Zum Sperren greift der Sperrriegel in ein Rastelement einer auf der Lenkspindel befestigten Hülse ein. Zum Lösen der Verriegelung fährt der Sperrriegel aus dem Rastelement der Hülse und gibt damit die Bewegung der Lenkspindel bzw. des Lenkrades wieder frei.

Im Stand der Technik werden, wie in der WO 2010/035127 A1 beschrieben, Toleranzringe in Lenksäulen verwendet, um die Lenkradsperre mit der Lenksäulenwelle zu verbinden. Dabei wird der Toleranzring durch ein Rastelement, das im verriegelten Zustand mit der Lenkradsperre in Eingriff steht, um den Wellenumfang gehalten. Im entriegelten Zustand der Lenkradsperre dreht sich der Toleranzring mit dem Rastelement ungehindert, sodass der Fahrer das Auto lenken kann. Gleichzeitig sind die Toleranzringe derart ausgebildet, dass sie ein Aufbrechen der Lenkradsperre verhindern. Über Toleranzringe wirken hohe Drehmomente auf die Welle und das Rastelement. Oberhalb eines Grenzwertes können die Welle und das Rastelement relativ zueinander rutschen. Befindet sich die Lenksäule bei einer unbefugten Inbetriebnahme des Fahrzeugs im verriegelten Zustand, kann das Kraftfahrzeug nicht gut gelenkt werden. Gleichzeitig wird eine Beschädigung der Lenksäule verhindert. Nachteile des Einsatzes eines solchen Toleranzrings bestehen darin, dass zur Erreichung eines definierten Grenzwertes des Drehmomentes zwischen Welle und Rastelement ein erheblicher Aufwand erforderlich ist. Dabei kann es erforderlich sein, zwei Toleranzringe einzusetzen oder Nuten in die Welle einzuarbeiten.

Die DE 100 12 323 A1 offenbart eine Blockierhülse für eine Lenksäule, welche von einem mit Profil versehenen Rohrabschnitt gebildet wird, welcher mit Riefen versehen ist. Die Riefen haben auf der Außenseite des Rohrabschnitts herausragende und vertiefte Bereiche, die mit einem Riegel eines Verriegelungsmechanismus zusammenwirken und auf der Innenseite weisen die Riefen Kontaktflächen mit der Lenksäule auf. Die Blockierhülse wird unter Krafteinwirkung auf die Lenksäule aufgeschoben. Nachteil dieser Lösung ist, dass die Form der Blockierhülse nicht elastisch genug ist, um das Aufschieben eines Rastelements unter Krafteinwirkung auf die Lenksäule zu ermöglichen und gleichzeitig Herstellungstoleranzen ausreichend zu absorbieren. Zudem ist durch die Geometrie der Blockierhülse es nicht möglich, einen präzise definierten und reproduzierbaren Grenzwert des Drehmoments zwischen Welle und Rastelement zu erreichen.

Die EP 1 568 554 A1 offenbart ein Verfahren zur Herstellung einer Blockierhülse, welche durch Umformen zu einem im Querschnitt hohlprofilartigen rohrförmigen Hülsenkörper mit einer Trennfuge geformt wird. An jeder Trennfuge wird mit einem Verbindungselement ein geschlossener Hohlkörper gebildet. Das Formen der Auskragungen kann durch einen spanlosen Umformvorgang, wie beispielsweise Tiefziehen erfolgen. Das Einrollen des Hülsenkörpers kann in mehreren Umform-bzw. Biegeschritten erfolgen. Nachteil dieses Herstellungsverfahrens ist, dass bei hohen Umformgraden, insbesondere in den Biegeradien, Rissbildung entstehen kann.

Aus der DE 100 12 323 A1 ist ein Raststern bekannt, welcher aus einem mit Riefen versehenen Rohrabschnitt gebildet wird. Der Raststern weist auf seiner Innenseite Kontaktflächen mit der Lenksäule auf. Ein ausreichend hohes, definiertes Durchdrehmoment des Raststerns auf der Lenksäule kann jedoch nicht befriedigend reproduzierbar vorgegeben werden.

Es ist daher Aufgabe der Erfindung, einen Raststern für ein Lenkschloss eines Kraftfahrzeugs bereitzustellen, welcher einen reproduzierbar definierten Grenzwert des Drehmoments zwischen Welle und Rastelement bereitstellt und zudem möglichst einfach und kostengünstig herstellbar ist.

Diese Aufgabe wird gelöst von einem Raststern mit den Merkmalen des Anspruchs 1 und Herstellungsverfahren mit den Merkmalen der Ansprüche 10 bis 12.

Danach ist Raststern für ein Lenkschloss eines Kraftfahrzeuges, vorgesehen, mit einem Hohlprofil mit einer Längsachse und mehreren am äußerem Umfang angeordneten Rastausnehmungen, die mit einem in Verriegelungs- oder Entriegelungsstellung überführbaren Sperrriegel des Lenkschlosses in Eingriff bringbar sind, wobei die Rastausnehmungen durch Auskragungen gebildet sind und eine Innenfläche des Raststerns eine in der Umfangskontur kreisförmige durchbrochene Anlagefläche bildet, wobei sich die Rastausnehmungen parallel zur Längsachse über die gesamte Länge des Raststerns gleichbleibend erstrecken, wobei erfindungsgemäß die Umfangskontur auf der Innenseite des Raststerns insgesamt eine Gruppe von Teilflächen eines Zylindermantels eines Kreiszylinders bildet, wobei die Auskragungen auf der Innenseite Taschen bilden und zwischen zwei Fünftel und drei Viertel des Umfangs einer kreisförmigen Einhüllenden einnehmen.

Erfindungsgemäß bilden die Auskragungen auf der Innenseite Taschen.

Die Auskragungen nehmen zwischen zwei Fünftel und drei Viertel des Umfangs der kreisförmigen Einhüllenden des Raststerns ein, insbesondere zwischen zwei Fünftel und ein Halb des Umfangs der kreisförmigen Einhüllenden.

Dieses Hohlprofil ist besonders einfach herzustellen und so elastisch, dass sich der Raststern ohne Beschädigung der Lenkspindel auf diese aufbringen lässt. Durch die im Querschnitt im wesentliche kreisförmige Umfangskontur, die auf der Innenseite des Raststerns insgesamt eine Gruppe von Teilflächen eines Zylindermantels eines Kreiszylinders bildet, liegt der Raststern definiert an der Lenkspindel an.

Vorzugsweise sind die Rastausnehmungen gleichmäßig über den Umfang verteilt angeordnet.

Es ist vorgesehen, dass der Raststern wenigstens vier Rastausnehmungen hat. Dabei sind acht Rastausnehmungen besonders bevorzugt.

Besonders bevorzugt sind die Auskragungen U-förmig ausgestaltet und weisen eine über die kreisförmige Einhüllende hinausragende Höhe auf, die zwischen der einfachen und der dreifachen Materialstärke des Raststerns, insbesondere in etwa der anderthalbfachen Materialstärke des Raststerns, entspricht.

Vorzugsweise sind alle Auskragungen gleich ausgeformt.

Weiterhin ist ein Lenkschloss mit einem zuvor beschriebenen Raststern vorgesehen.

Es ist zudem ein bevorzugtes Verfahren zur Herstellung eines zuvor beschriebenen Raststerns für Lenkschlösser vorgesehen, dass folgende Schritte aufweist: Biegeumformen beziehungsweise Rollen eines Blechs zur Bildung der Auskragungen und Rastausnehmungen; Biegeumformen des profilierten Blechs zu einem im Querschnitt hohlprofilartigen Körper; Verbinden des profilierten Bleches zu einem geschlossenen Hohlprofil, beispielsweise durch Schweißen.

Ein weiteres Verfahren weist das Einbringen von metallischem Material in einen Aufnehmer und das Formen des Raststerns durch Strangpressen des Materials durch eine Matrize auf.

Alternativ kann der Raststern auch als Abschnitt eines gezogenen Profils dargestellt werden.

Der Raststern mit seinen Auskragungen kann zudem bevorzugt durch Fließpressen geformt werden.

Bevorzugte Ausführungsformen der Erfindung werden nachfolgend anhand der Zeichnungen näher erläutert. Gleiche oder gleichwirkende Bauteile sind mit denselben Bezugsziffern bezeichnet. Es zeigen:
- Fig. 1:: eine schematische Darstellung einer Lenkspindel mit Raststern und Verriegelungsmechanismus,
- Fig. 2:: Schematische Darstellung der Lenkspindel mit Raststern im Querschnitt durch die Lenkspindel gesehen,
- Fig. 3:: einen Querschnitt eines Raststerns,
- Fig. 4:: eine räumliche Ansicht des Raststerns der Fig. 3,
- Fig. 5:: eine Seitenansicht des Raststerns der Fig. 3,
- Fig. 6:: einen Querschnitt einer zweiten Ausführungsform eines Raststerns,
- Fig. 7:: einen Querschnitts einer dritten Ausführungsform eines Raststerns,
- Fig. 8:: einen Querschnitt einer vierten Ausführungsform eines Raststerns,
- Fig. 9:: einen Querschnitt einer weiteren Ausführungsform eines Raststerns,
- Fig. 10:: eine Seitenansicht des Raststerns der Fig. 9,
- Fig. 11:: eine räumliche Ansicht des Raststerns der Fig. 9,
- Fig. 12:: eine räumliche Ansicht einer weitern Ausführungsform eines Raststerns, sowie
- Fig. 13:: einen Querschnitt des Raststerns der Fig. 12.

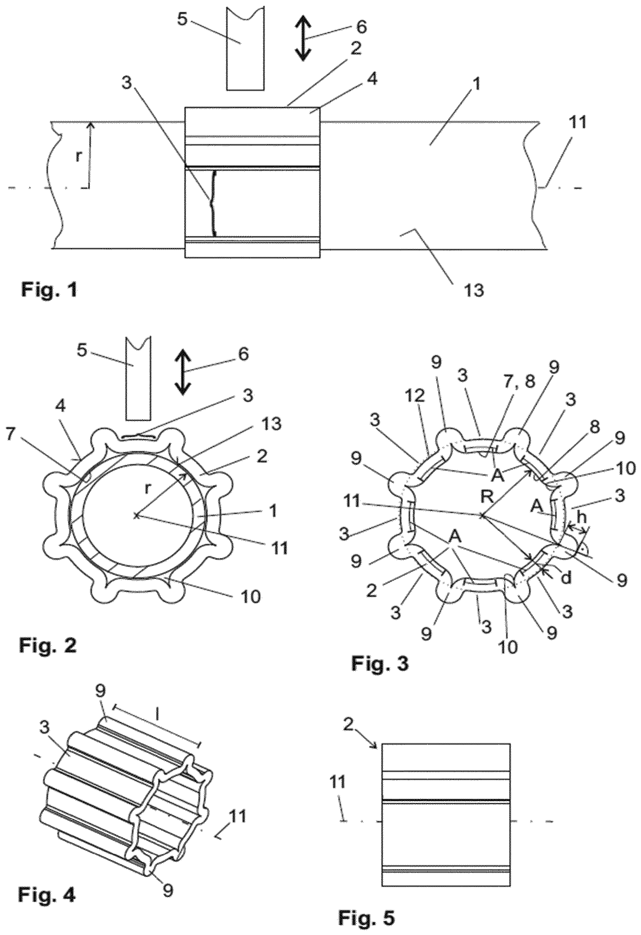

Figuren1 und 2 zeigen schematisch eine Lenkspindel 1 mit einem direkt darauf angeordneten Raststern 2, welcher einerseits im verriegelten Zustand die Drehbewegung der Lenksäule verhindert und gleichzeitig ein hohes Drehmoment bereitstellt, um zu verhindern, dass die Lenksperre im Falle eines Diebstahls aufgebrochen wird. Gleichzeitig ist der Raststern 2 derart ausgelegt, dass bei Überschreiten eines vordefinierten Verdrehmomentes, beispielsweise mehr als 200 Nm, ein Durchrutschen des Raststerns 2 auf der Lenkspindel 1 erfolgt, so dass die Lenkspindel 1 nicht zerstört wird. Der Raststern 2 weist mehrere Rastausnehmungen 3 auf seiner Außenseite 4 auf. Der Sperrriegel 5 ist Bestandteil eines Lenkschlosses und gemäß dem dargestellten Doppelpfeil 6 verstellbar im Lenkschloss gelagert. Der Sperrriegel 5 bewegt sich dabei in Abhängigkeit von einer Verriegelungs- oder Entriegelungsstellung des Lenkschlosses in eine der Rastausnehmung 3 des Raststerns 2 oder von dieser weg.

Der Raststern 2 wird unter Krafteinwirkung auf die Lenkspindel 1 zur Bildung einer reibschlüssigen Verbindung aufgeschoben, wobei die Lenkspindel 1 bevorzugt exakt kreiszylindrisch ausgebildet ist und einen äußeren Außenradius r aufweist. Die Lenkspindel kann allerdings auch nur abschnittsweise kreiszylindrisch ausgebildet sein, wobei sie einen Hüllkreis mit einem Außenradius r aufweist.

Die Figuren 3 bis 5 zeigen eine erste Ausführungsform des Raststerns 2. Der Raststern 2 weist ein über die gesamte Raststernlänge I identisches Hohlprofil auf. Die Innenfläche 7 bildet eine in der Umfangskontur kreisförmige durchbrochene Anlagefläche 8, die mit der Lenkspindel 1 im montierten Zustand in Anlage liegt. Die anliegenden Anlageflächenabschnitte haben jeweils eine Bogenlänge A, entlang der die Innenfläche 7 des Raststerns 2 eine kreisförmige Anlagefläche 8 mit einem Innenradius R bildet. Die Summe der einzelnen Bogenlängen A, an denen die Innenfläche 7 des Raststern 2 mit der Außenfläche 13 der Lenkspindel in unmittelbarem Press-Kontakt steht ist bevorzugt mindestens 30% der Bogenlänge des Außenumfangs (=Umfangsbogenlänge) der Lenkspindel 2. Mehr bevorzugt ist die Summe der einzelnen Bogenlängen A größer 40% oder gleich 40% der Umfangsbogenlänge der Lenkspindel 2. Weiter zu bevorzugen ist es, wenn die Summe der einzelnen Bogenlängen A größer oder gleich 50% der Umfangsbogenlänge der Lenkspindel 2 ist. In allen Fällen ist es dabei zu bevorzugen, wenn die Summe der Bogenlängen A weniger als 80% der Umfangsbogenlänge der Lenkspindel 2 ausmacht. Dies gilt insbesondere auch für die weiter unten dargestellten Ausführungsbeispiele.

Der Raststern 2 weist auf der Außenseite 4 in regelmäßigen Abständen über den Umfang verteilte gleichgeformte Auskragungen 9 auf, die auf der Innenseite gegengeformte Taschen 10 ausbilden. Die Auskragungen 9 sind im Wesentlichen U-förmig ausgestaltet und parallel zu einer Längsachse 11 des Raststerns 2 angeordnet. Sie sind im Wesentlichen stegförmig ausgeformt. Die Auskragungen 9 nehmen in etwa zwei Fünftel des Umfangs einer kreisförmigen Einhüllenden 12 ein. Die Auskragungen 9 weisen dabei eine Höhe h auf, mit der sie die Einhüllende 12 überragen, die in etwa der Materialstärke d des Raststerns 2 entspricht. Die Höhe h und die Materialstärke d werden dabei parallel zur Linie zur Längsachse 11 gemessen, wie dies in Figur 3 veranschau-licht ist. Insgesamt sind acht Auskragungen 9 vorgesehen. Eine auf der Außenseite 4 liegende Rastausnehmung 3 wird durch zwei benachbarte Auskragungen 9 geformt. Die Taschen 10 sind dabei in Umfangsrichtung besonders schmal ausgeformt, um die Anlagefläche 8 des Raststerns 2 auf der Lenkspindel 1 vorzugsweise möglichst groß auszugestalten. Dadurch kann ein hohes zu übertragenes Drehmoment erreicht werden. Im Fall des Überschrei-tens der Schwelle des maximal übertragbaren Drehmoments ist trotz der großflächigen Anlagefläche 8 des Raststerns 2 auf der Lenkspindel 1 eine Verdrehung des Raststerns 2 relativ zur Lenkspindel 1 gesichert. Da das gewellte Profil über die gesamte Raststernlänge I gleich ist, weist der Raststern 2 ein hohes Maß an Elastizität auf. Dieses ist notwendig, um den Raststern 2 auf die Lenkspindel 1 ohne Beschädigung und mit sicherem Presssitz aufzu-bringen. Mit Vorzug ist der Außenradius r der Lenkspindel und der Innenradius R des Raststerns vor der Montage mit einer Überdeckung zur Bildung des Presssitzes ausgebildet. Die Überdeckungen betragen dabei bevorzugt mindestens 0,02 mm. Besonders bevorzugt sind Überdeckungen von mindestens 0,05 mm. Überdeckungen von mehr als 2 mm sind allerdings bevorzugt zu vermeiden. Bevorzugt sind Überdeckungen im Bereich von 0,1 mm bis 1,0 mm zur Ausbildung einer gewünschten Drehmomentfestigkeit der Pressverbindung. Besonders bevorzugt sind Überdeckungen im Bereich von 0,2 mm bis 0,8 mm zur Ausbildung einer gewünschten Drehmoment-festigkeit der Pressverbindung. Diese Überdeckungen sind insbesondere auch für die weiter unten ausgeführten Ausführungsbeispiele anwendbar.

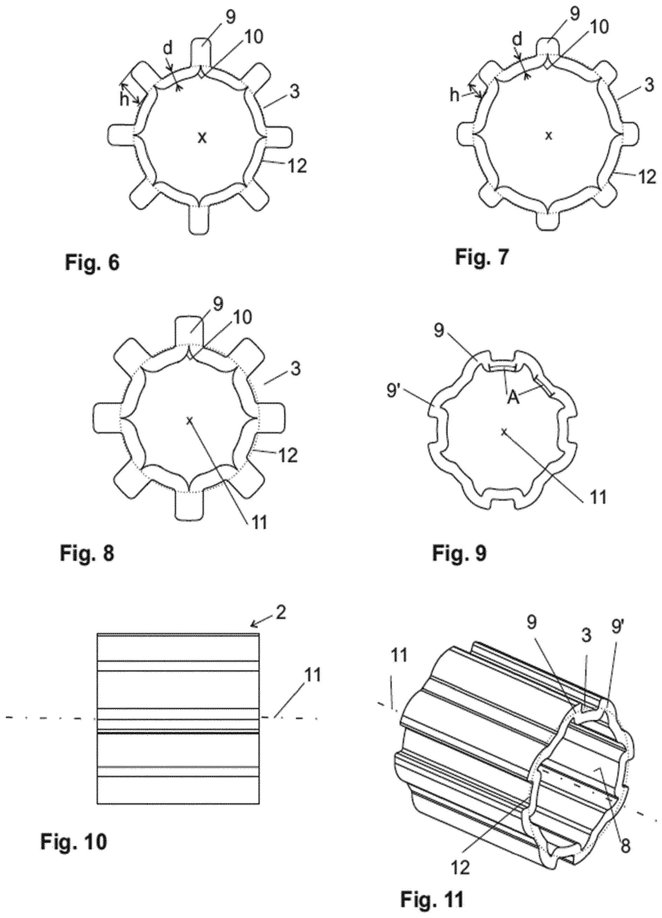

Die Figuren 4 bis 8 zeigen weitere bevorzugte Ausführungsformen des Raststerns 2 mit acht gleichmäßig über den Umfang verteilten Auskragungen 9. Die Ausführungsform der Figur 6 zeigt Auskragungen 9, die ebenfalls in etwa zwei Fünftel des Umfangs der kreisförmigen Einhüllenden 12 einnehmen. Die Auskragungen 9 weisen dabei eine Höhe h auf, die in etwa der dreifachen Materialstärke d des Raststerns 2 entspricht.

Die Dehnung des Raststerns 2 ist entsprechend der Ausführungsform gemäß der Figur 7 besonders groß. Die Auskragungen 9 weisen hier eine Höhe h auf, die in etwa der anderthalbfachen Materialstärke d des Raststerns 2 entspricht. Im Gegensatz zu den vorhergehenden Ausführungsbeispielen bilden die Auskragungen 9 nur in etwa ein Drittel des Umfangs der kreisförmigen Einhüllenden 12.

Die Ausführungsform der Figur 8 zeigt Auskragungen 9, die die Hälfte des Umfangs der kreisförmigen Einhüllenden 12 einnehmen und in etwa um die doppelte Materialstärke d des Raststerns über die Einhüllende 12 hinausragen.

Das Ausführungsbeispiel der Figuren 9 bis 11 zeigt Auskragungen 9, 9', die jeweils paarweise ausgestaltet sind. Die Auskragungen 9, 9' sind sägezahnförmig ausgeformt und jeweils in Umfangsrichtung aufeinanderfolgend spiegelverkehrt zueinander ausgerichtet. Zwischen den paarweise angeordneten Auskragungen 9, 9' bilden sich jeweils Rastausnehmung 3 aus, so dass insgesamt vier Rastausnehmungen 3 vorgesehen sind. Diese Ausführung ist besonders gut geeignet zur Darstellung in einem Strangpressverfahren.

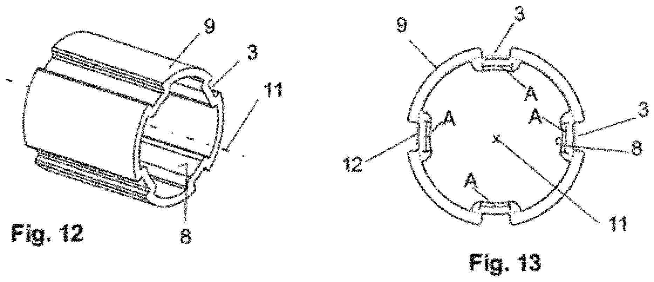

Die Figuren 12 und 13 zeigen eine weitere Ausführungsform bei der vier U-förmige und über den Umfang gleichmäßig verteilte Rastausnehmungen 3 auf der Außenseite angeordnet sind, die durch vier Auskragungen 9 gebildet sind. Die Auskragungen 9 nehmen in etwa drei Viertel des Umfangs der kreisförmigen Einhüllenden 12 ein. Die Auskragungen 9 bzw. Rastausnehmungen 3 sind so geformt, dass sie auf der Innenseite eine unterbrochene kreisförmige Anlage 8 an der Lenkspindel 1 bilden. Diese Ausführung ist besonders gut geeignet zur Darstellung in einem Strangpressverfahren.

Der Raststern ist vorzugsweise aus einem gut umformbaren Stahl oder aber auch aus Federstahl hergestellt.

Die Herstellung des Raststerns kann durch Biegeumformen, insbesondere durch Rollprofilieren, erfolgen. Dabei wird vorzugsweise ein Metallblech stückweise gebogen, bis am Ende das fertige Profil mit der gewünschten Anzahl an Auskragungen bzw. Rastausnehmungen herauskommt. Vorzugsweise wird das Metallblech nach dem Rundbiegen zu einem profilierten Hohlrohr verschweißt.

In einer weiteren bevorzugten Ausführungsform der Erfindung wird der Raststern in eine Matrize eingebracht und mittels Strangpressen oder Lochen geformt. Auch ein Fließpressverfahren ist zur Herstellung des Raststerns möglich.

Der erfindungsgemäße Raststern für ein Lenkschloss eines Kraftfahrzeugs weist durch sein durchgehendes gewelltes Hohlprofil besonders gute Torsionseigenschaften auf. Ein Toleranzring zum Ausgleich von Toleranzen und zur Darstellung eines Drehmoments ist daher verzichtbar. Durch Wahl der Anlagefläche zwischen dem Raststerns und der Lenkspindel wird ein definierter Grenzwert des Drehmoments zwischen Lenkspindel und Rastelement eingestellt. Da das Hohlprofil über die Länge des Raststerns gleichbleibend ist, ist der Raststern besonders einfach und kostengünstig herstellbar.

## Patentansprüche

1. Raststern (2) für ein Lenkschloss eines Kraftfahrzeuges, aufweisend ein Hohlprofil mit einer Längsachse (11) und mehreren Rastausnehmungen (3), die mit einem in Verriegelungs- oder Entriegelungsstellung überführbaren Sperrriegel (5) des Lenkschlosses in Eingriff bringbar sind, wobei die Rastausnehmungen (3) durch Auskragungen (9, 9') gebildet sind und eine Innenfläche (7) des Raststerns (2) eine in der Umfangskontur kreisförmige durchbrochene Anlagefläche (8) bildet, wobei sich die Rastausnehmungen (3) parallel zur Längsachse (11) über die gesamte Länge (I) des Raststerns (2) gleichbleibend erstrecken, **dadurch gekennzeichnet, dass** die Umfangskontur auf der Innenseite des Raststerns (2) insgesamt eine Gruppe von Teilflächen eines Zylindermantels eines Kreiszylinders bildet, wobei die Auskragungen (9, 9') auf der Innenseite (7) Taschen (10) bilden und zwischen zwei Fünftel und drei Viertel des Umfangs einer kreisförmigen Einhüllenden (12) einnehmen.

2. Raststern nach Anspruch 1, **dadurch gekennzeichnet, dass** sich die Rastausnehmungen (3) gleichmäßig verteilt über den Umfang erstrecken.

3. Raststern nach Anspruch 1 oder 2, **dadurch gekennzeichnet, dass** wenigstens vier Rastausnehmungen (3) vorgesehen sind.

4. Raststern nach einem der vorhergehenden Ansprüche, **dadurch gekennzeichnet, dass** acht Rastausnehmungen (3) vorgesehen sind.

5. Raststern nach einem der vorhergehenden Ansprüche, **dadurch gekennzeichnet, dass** die Auskragungen (9, 9') zwischen zwei Fünftel und ein Halb des Umfangs der kreisförmigen Einhüllenden (12) einnehmen.

6. Raststern nach einem der vorhergehenden Ansprüche, **dadurch gekennzeichnet, dass** die Auskragungen (9, 9') U-förmig ausgestaltet sind und eine über die kreisförmige Einhüllende (12) hinausragende Höhe (h) aufweisen, die zwischen der einfachen und der dreifachen Materialstärke (d) des Raststerns (2) entspricht.

7. Raststern nach einem der vorhergehenden Ansprüche, **dadurch gekennzeichnet, dass** die Höhe (h) der Auskragungen (9, 9') in etwa der anderthalbfachen Materialstärke (d) des Raststerns (2) entspricht.

8. Raststern nach einem der vorhergehenden Ansprüche, **dadurch gekennzeichnet, dass** alle Auskragungen (9, 9') gleich ausgeformt sind.

9. Lenkschloss für eine Kraftfahrzeuglenkung mit einem Raststern (2) nach einem der vorhergehenden Ansprüche 1 bis 8.

10. Verfahren zur Herstellung eines Raststerns (2) für Lenkschlösser von Kraftfahrzeugen, nach einem der vorhergehenden Ansprüche 1 bis 8, **dadurch gekennzeichnet, dass** folgende Schritte vorgesehen sind:
• Biegeumformen eines Blechs zur Bildung der Auskragungen (9, 9') und Rastausnehmungen (3)
• Biegeumformen des profilierten Blechs zu einem im Querschnitt hohlprofilartigen Körper
• Verbinden des profilierten Bleches zu einem geschlossenen Hohlprofil.

11. Verfahren zur Herstellung eines Raststerns (2) für Lenkschlösser von Kraftfahrzeugen, nach einem der vorhergehenden Ansprüche 1 bis 8, **dadurch gekennzeichnet, dass** folgende Schritte vorgesehen sind:
• Einbringen von metallischem Material in einen Aufnehmer,
• Formen des Raststerns (2) durch Strangpressen des Materials durch eine Matrize.

12. Verfahren zur Herstellung eines Raststerns (2) für Lenkschlösser von Kraftfahrzeugen, nach einem der vorhergehenden Ansprüche 1 bis 8, **dadurch gekennzeichnet, dass** der Raststern (2) mit seinen Auskragungen (9, 9') durch Fließpressen einstückig geformt wird.

## Claims

1. Latching star wheel (2) for a steering lock of a motor vehicle, having a hollow profile with a longitudinal axis (11) and a plurality of latching recesses (3) which can be brought into engagement with a locking bar (5) of the steering lock that can be moved into the locking or unlocking position, wherein the latching recesses (3) are formed by projections (9, 9') and an inner surface (7) of the latching star wheel (2) forms a contact surface (8) that is circularly perforated in the circumferential contour, wherein the latching recesses (3) extend consistently in parallel to the longitudinal axis (11) across the entire length (1) of the latching star wheel (2), **characterized in that** the circumferential contour on the inside of the of the latching star wheel (2) overall forms a group of sub-surfaces of a cylinder shell of a circular cylinder, wherein the projections (9, 9') form pockets (10) on the inside (7) and take up between two-fifths and three-quarters of the circumference of a circular envelope (12).

2. Latching star wheel according to Claim 1, **characterized in that** the latching recesses (3) extend in a uniformly distributed manner over the circumference.

3. Latching star wheel according to claim 1 or 2, **characterized in that** at least four latching recesses (3) are provided.

4. Latching star wheel according to one of the preceding claims, **characterized in that** eight latching recesses (3) are provided.

5. Latching star wheel according to one of the preceding claims, **characterized in that** the projections (9, 9') take up between two-fifths and half of the circumference of a circular envelope (12).

6. Latching star wheel according to one of the preceding claims, **characterized in that** the projections (9, 9') are U-shaped and have a height (h) projecting beyond the circular envelope (12) which corresponds to between one and three times the material thickness (d) of the latching star wheel (2).

7. Latching star wheel according to one of the preceding claims, **characterized in that** the height (h) of the projections (9, 9') roughly corresponds to one-and-a-half times the material thickness (d) of the latching star wheel (2).

8. Latching star wheel according to one of the preceding claims, **characterized in that** all projections (9, 9') are identically formed.

9. Steering lock for a motor vehicle steering system having a latching star wheel (2) according to one of preceding Claims 1 to 8.

10. Method for producing a latching star wheel (2) for steering locks of motor vehicles according to one of preceding Claims 1 to 8, **characterized in that** the following steps are provided:
• bend-forming of a metal sheet to form the projections (9, 9') and latching recesses (3)
• bend-forming of the profiled metal sheet into a body which is hollow-profiled in cross section
• joining of the profiled metal sheet to a closed hollow profile.

11. Method for producing a latching star wheel (2) for steering locks of motor vehicles according to one of preceding Claims 1 to 8, **characterized in that** the following steps are provided:
• introducing metallic material into a cavity,
• forming of the latching star wheel (2) through extrusion moulding of the material through a die plate.

12. Method for producing a latching star wheel (2) for steering locks of motor vehicles according to one of preceding Claims 1 to 8, **characterized in that** the latching star wheel (2) with the projections (9, 9') thereof is formed in one piece by impact extrusion.

## Revendications

1. Etoile d'arrêt (2) destinée à une serrure de direction d'un véhicule automobile, présentant un profilé creux doté d'un axe longitudinal (11) et de plusieurs évidements d'arrêt (3) qui peuvent être mis en prise avec un verrou de blocage (5) de la serrure de direction, qui peut être transféré dans une position de verrouillage ou de déverrouillage, les évidements d'arrêt (3) étant formés par des saillies (9, 9') et une surface intérieure (7) de l'étoile d'arrêt (2) formant une surface d'appui (8) discontinue circulaire au niveau d'un contour circonférentiel, les évidements d'arrêt (3) s'étendant de manière constante en parallèle à l'axe longitudinal (11) sur toute la longueur (l) de l'étoile d'arrêt (2),
**caractérisée en ce que** le contour circonférentiel forme sur la face intérieure de l'étoile d'arrêt (2) globalement un groupe de surfaces partielles d'un corps de cylindre d'un cylindre circulaire, les saillies (9, 9') formant des poches (10) sur la face intérieure (7) et occupant entre deux cinquièmes et trois quarts de la circonférence d'une enveloppe circulaire (12).

2. Etoile d'arrêt selon la revendication 1, **caractérisée en ce que** les évidements d'arrêt (3) s'étendent de manière uniformément répartie sur la circonférence.

3. Etoile d'arrêt selon la revendication 1 ou 2, **caractérisée en ce qu'**au moins quatre évidements d'arrêt (3) sont prévus.

4. Etoile d'arrêt selon l'une quelconque des revendications précédentes, **caractérisée en ce que** huit évidements d'arrêt (3) sont prévus.

5. Etoile d'arrêt selon l'une quelconque des revendications précédentes, **caractérisée en ce que** les saillies (9, 9') occupent entre deux cinquièmes et la moitié de la circonférence de l'enveloppe circulaire (12) .

6. Etoile d'arrêt selon l'une quelconque des revendications précédentes, **caractérisée en ce que** les saillies (9, 9') sont configurées en forme de U et présentent une hauteur (h) dépassant de l'enveloppe circulaire (12) qui correspond à une à trois fois l'épaisseur du matériau (d) de l'étoile d'arrêt (2).

7. Etoile d'arrêt selon l'une quelconque des revendications précédentes, **caractérisée en ce que** la hauteur (h) des saillies (9, 9') correspond approximativement à une fois et demi l'épaisseur du matériau (d) de l'étoile d'arrêt (2).

8. Etoile d'arrêt selon l'une quelconque des revendications précédentes, **caractérisée en ce que** toutes les saillies (9, 9') sont façonnées de la même manière.

9. Serrure de direction pour une direction de véhicule automobile, comprenant une étoile d'arrêt (2) selon l'une quelconque des revendications précédentes 1 à 8.

10. Procédé de fabrication d'une étoile d'arrêt (2) destinée à des serrures de direction de véhicules automobiles selon l'une quelconque des revendications précédentes 1 à 8, **caractérisé en ce que** les étapes suivantes sont prévues :
• déformation plastique par flexion d'une tôle pour former les saillies (9, 9') et les évidements d'arrêt (3),
• déformation plastique par flexion de la tôle profilée en un corps de type profilé creux en section transversale,
• raccordement des tôles profilées en un profilé creux fermé.

11. Procédé de fabrication d'une étoile d'arrêt (2) destinée à des serrures de direction de véhicules automobiles selon l'une quelconque des revendications précédentes 1 à 8, **caractérisé en ce que** les étapes suivantes sont prévues :
• introduction d'un matériau métallique dans un logement,
• formation de l'étoile d'arrêt (2) par extrusion du matériau à travers une matrice.

12. Procédé de fabrication d'une étoile d'arrêt (2) destinée à des serrures de direction de véhicules automobiles selon l'une quelconque des revendications précédentes 1 à 8, **caractérisé en ce que** l'étoile d'arrêt (2) avec ses saillies (9, 9') est formée d'un seul tenant par formage par fluage.
